# EUROPEAN PATENT SPECIFICATION

(11) **EP 3 145 880 B1**
(45) Date of publication and mention of the grant of the patent: **18.05.2022**
(21) Application number: 15796406.5
(22) Date of filing: 14.05.2015
(51) Int. Cl.: C02F 11/10, C02F 11/06, B01J 20/30, C02F 101/20, C02F 101/36, B01J 20/02, B01J 20/04, B01J 20/10, B01J 20/16, B01J 20/20, D21B 1/02, C02F 11/121, C02F 103/28, F23G 7/00

(54) **INTEGRATED RECYCLING SYSTEM AND METHODS FOR USE OF SLUDGE**
INTEGRIERTES RECYCLINGSYSTEM UND VERFAHREN ZUR VERWENDUNG VON SCHLAMM
SYSTÈME DE RECYCLAGE INTÉGRÉ ET PROCÉDÉS D'UTILISATION DE BOUES

(30) Priority: 21.05.2014 US 201462001609 P
(43) Date of publication of application: 29.03.2017
(73) Proprietor: Georgia-Pacific LLC, Atlanta, GA 30303 (US)
(72) Inventor: TOPPING, Paul, Smyrna, Georgia 30082 (US); SEN, Subrata, Kennesaw, Georgia 30152 (US)
(74) Representative: Grünecker Patent- und Rechtsanwälte PartG mbB
(86) International application number: PCT/US2015/030722
(87) International publication number: WO 2015/179199

(56) References cited:
- EP-A1- 1 152 833
- EP-A1- 2 703 050
- JP-A- 2003 013 069
- KR-A- 20010 112 132
- KR-A- 20040 069 661
- US-A1- 2007 173 679
- US-A1- 2008 307 960
- US-A1- 2011 099 890
- None

## Description

### TECHNICAL FIELD

Embodiments of the present application are directed generally to integrated recycling systems and methods including a novel reuse of sludge from a waste fiber supply. In particular, embodiments of the present application are directed to adding an ash produced from the sludge to a plastic pyrolysis system for reduction or removal of contaminants.

### BACKGROUND

Paper recycling processes are effective at converting waste paper into usable paper products, benefitting both the environment and society by reducing the need to cut down trees for virgin pulp. About two-thirds of the paper that is recycled can be recovered as a usable fiber; however, the remaining one-third is a sludge of waste solids. The waste solids include both organic components (e.g., cellulosic particles referred to as "fines") and inorganic components (e.g., from paper fillers and other contaminants).

The waste solids generally are not suitable for use in manufacturing recycled paper products and generally are disposed of using various methods (including landfilling, incinerating, and dispersing on land). For example, the waste solids may be converted to ash that is landfilled, incinerated, or spread on land; however, increasing costs for disposal and concerns regarding environmental sustainability associated with such methods have made it more desirable to develop processes and systems for reusing the ash. Thus, there exists a need for improved methods and systems for practical applications of rejected wastepaper materials, such as sludge.

EP 2 703 050 A1 discloses the use of ashes as an alternative alkalising agent. WO 00/35588 discloses a method and production plant for the manufacture of fibrous material. US 2011/0099890 A1 discloses a sorbent containing engineered fuel feedstock.

### SUMMARY

The subject matter of the invention is as set out in the appended claims.

One aspect of the invention relates to a method for reuse of a sludge comprising:
treating a waste fiber supply comprising an organic fraction and an inorganic fraction to produce at least a plastic portion, a fiber portion, and a sludge portion;
dewatering the sludge portion to produce a partially dewatered sludge;
converting the partially dewatered sludge by burning the partially dewatered sludge at a temperature of 1375°C to 1900°C to remove a majority of the organic fraction and produce an ash comprising inorganic materials in an amount of at least 80% by weight of the ash; and
adding the ash to a plastic pyrolysis system in an effective amount to remove at least a portion of one or more contaminants from a plastic feed stream of the plastic pyrolysis system, wherein:
   the plastic pyrolysis system comprises a pyrolyzer, and
   the ash is added directly to the pyrolyzer via a different inlet than that used to introduce the plastic feed stream into the pyrolyzer.

A further aspect of the invention relates to an integrated recycling system comprising:
a fiber recovery system for treating a waste fiber supply to produce at least a plastic portion, a fiber portion, and a sludge portion;
a means for at least partially dewatering the sludge portion to produce a partially dewatered sludge;
a burner for converting the partially dewatered sludge at a temperature of 1375 °C to 1900 °C into an ash comprising inorganic materials in an amount of at least 80% by weight of the ash; and
a pyrolyzer configured to pyrolyze a mixture of the plastic portion and at least a portion of the ash, wherein the ash is added directly to the pyrolyzer via a different inlet than that used to introduce the plastic portion into the pyrolyzer.

Preferred embodiments are set forth in the subclaims.

### BRIEF DESCRIPTION OF THE DRAWINGS

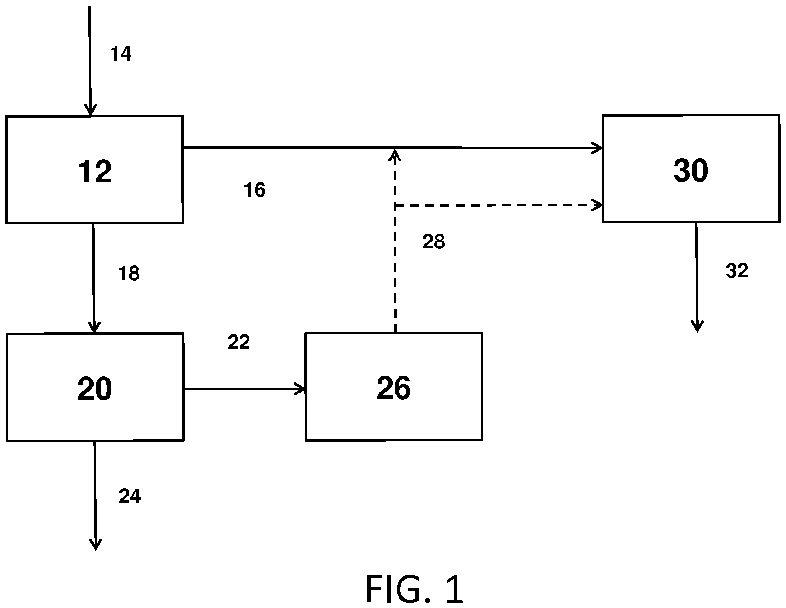

FIG. 1 is a schematic illustration of an integrated recycling system according to an embodiment.

### DETAILED DESCRIPTION

Embodiments of the present description include methods and systems for reuse of sludge, particularly sludges from a waste fiber supply in a pulp and paper mill.

The term "waste fiber" or "waste paper" are used interchangeably to refer to paper or cardboard-based materials from which recycled fiber can be recovered for re-use in manufacture of paper-based products. "Recycled" fiber thus refers to fiber materials that have previously been used in a paper or cardboard product.

When recovering recycled fiber from a waste paper supply, the waste paper is separated from other types of waste materials present in the waste paper supply, non-limiting examples of which may include plastics and metals. The waste paper then is subjected to a cleaning process in order to decolor and deink the fibers and remove impurities. Greater than about 50% by weight of the waste paper supply generally may be recovered in a fiber stream that is suitable for re-use. The remaining portion of the waste paper is transported with the waste water; which is discharged to the waste water treatment system. In that system, solids are typically separated by gravitational settling, which often is aided by the addition of chemicals that promote settling. The solids recovered are referred to as "sludge" and have a relatively high water content. For example, the solids content of the sludge may be from about 4% to about 12% by weight prior to undergoing any further dewatering processes. The sludge may comprise, for example, the unusable portion of deinked papers which comprise both an organic fraction and an inorganic fraction. The terms "deinking" or "deinked" refer to part of the recycling process in which the printing ink and other contaminants are removed from waste paper.

The sludge undergoes further processing to reduce the water content. For example, in one embodiment the process includes dewatering the sludge to reduce its water content and increase the waste solids content to from about 5% to about 60% by weight of the partially dewatered sludge. For example, in embodiments the sludge may be dewatered to increase the waste solids content to greater than about 40% by weight of the sludge.

The partially dewatered sludge is converted to a reusable product in the form of an ash by burning the sludge at a sufficiently high temperature to remove a majority of the organic fraction (e.g., cellulose fines, polymers, inks, adhesives and the like) from the sludge. The step of converting the sludge is performed at a temperature of 1375°C to 1900°C, which is effective to remove a majority of the organic fraction of the waste solids. In embodiments, the step of converting the sludge further may also comprise grinding the ash such that greater than about 60% of particles have an average diameter smaller than about 75 microns, greater than about 70% of particles have an average diameter smaller than about 75 microns, or greater than about 80% of particles have an average diameter smaller than about 75 microns.

"Ash", as used herein, refers to the composition that remains after burning the sludge and comprises the inorganic fraction of the waste solids. For example, the ash can include calcium oxides (e.g., precipitated calcium carbonate, ground calcium carbonate, gypsum), titanium dioxide, clay, alumina, silica, magnesium aluminum silicate, hydrated aluminum silicate, barium silicate, calcium silicate, magnesium silicate, strontium silicate, talc, mica, kaolin clay, sericite, muscovite, lepidolite, biotite, vermiculite, zeolite, barium sulfate, calcined calcium sulfate, hydroxyapatite, ceramic powder, colloidal silicone dioxide, boron nitride, or any combination thereof.

The inorganic fraction is present in the ash in an amount of at least about 80% by weight of the ash, optionally at least about 85% by weight of the ash, at least about 90% by weight of the ash, at least about 95% by weight of the ash, at least about 97% by weight of the ash, or at least about 99% by weight of the ash. The organic fraction may be present in the ash in an amount of less than about 10% by weight of the ash, less than about 5% by weight of the ash, less than about 3% by weight of the ash, or less than about 1% by weight of the ash. For example, in embodiments the ash may be substantially free of an organic fraction. As used herein, "substantially free" means that loss on ignition is less than 1.5%.

Rather than disposing of the ash in landfills or via other methods, the ash is added to a plastic pyrolysis system used to convert a plastic feed stream (e.g., plastics separated from the waste paper supply, residual plastics from material recovery facilities, or from other sources) into one or more re-usable products or intermediates that may be converted into re-usable products. The inorganic fraction of the ash is particularly effective for use as an absorbent, for example, in reducing or removing contaminants from the plastic feed stream, non-limiting examples of which include chlorine, mercury, sulfur, and The is combinations thereof. The ash is added directly to the plastic pyrolysis system to reduce and/or eliminate emissions of one or more contaminants from the plastic pyrolysis system.

The ash is added to the plastic pyrolysis system in an effective amount to remove at least a portion of one or more contaminants from a plastic feed stream of the plastic pyrolysis system. An effective amount, as used herein, may be characterized by a stoichiometric ratio of the ash to the one or more contaminants in the plastic feed stream of about 0.5:1 to about 5:1, or more particularly, about 1:1 to about 4:1. For example, in embodiments where the plastic feed stream comprises plastic in an amount from about 50% to about 90% by weight of the plastic feed stream, an effective amount of ash is from about 3% to about 6% by weight of the plastic feed stream.

The primary reactions between the ash and contaminants can be further understood by the following exemplary reactions:

-(CH₂ - CHCl)ₙ- → - (CH=CH)ₙ- + nHCl (T ~ 300°C, time= 30-60 min)

2HCl + CaO → CaCl₂ + H₂O

CaCO₃ + 2HCl → CaCl₂ + H₂O + CO₂

Use of ash as a sorbent in this manner is compatible with a variety of plastic pyrolysis processes and apparatus, including but not limited to those described in the following patents: EP20030733683, WO2003104354 Al, WO2013015819 A1, US6150577 A, EP1577366 A2 and US7892500 B2.

In another aspect, an integrated recycling system is provided, an embodiment of which is illustrated in **FIG. 1**. The integrated recycling system **10** may include a separating means **12**, and it includes at least a fiber recovery system **20**, a conversion means **26**, and a plastic pyrolyzer **30**.

The separating means **12** may be any type of separation device effective at removing plastics and/or other materials from a waste fiber supply **14**. For example, the separating means **12** may be used to separate the waste fiber supply **14** into a plastic stream 16 and a fiber stream **18**. In embodiments, the separation device may also be effective at separating other contaminants from the waste fiber supply stream **14** (e.g., glass, metals, and the like), thereby enabling use of lower quality sources of waste fiber supply than currently are used in most recycling facilities. In embodiments, the separating means **12** may be a trommel, various kinds of pulpers, or an autoclave.

The fiber recovery system **20** facilitates recovery of reusable fiber **24** from the fiber stream 18, which includes at least a portion of a feed source of printing and writing papers so that active minerals are present. Various fiber recovery systems **20** are known and generally include one or more cleaners, deinkers, clarifiers, and the like. In embodiments, the fiber recovery system **20** include a separator for recovering the pulp suitable for use in making paper (i.e., long fibers) while from other solids, such as short fibers and inorganic materials not fixed to long fibers. These solids are separated from the waste water in a clarifier and are then converted in the combustor **26**. Thus, the sludge **22** resulting from the treatment of the fiber stream **18** may be collected at one or more stages from the fiber recovery system **20**, particularly from the primary clarifier (at which point the sludge frequently is referred to as a deinked secondary fiber sludge). A means for at least partially dewatering the sludge is also included as a part of the fiber recovery system or as part of the integrated recycling system. For example, a means for at least partially dewatering the sludge may include a mechanical press, screw press, belt filter, plate and frame filter, or centrifuge.

The sludge **22** is transferred from the fiber recovery system **20** to a conversion means **26** for converting at least a portion of the sludge **22** into ash **28.** The conversion means **26** is a burner or other suitable combustor capable of operating at a sufficiently high temperature for removal of the organic fraction of the waste solids. In embodiments, the conversion means **26** also may comprise a grinder or other suitable means for reducing the average particle size of the ash **28.**

The integrated recycling system **10** further comprises a pyrolyzer **30** configured to pyrolyze the plastic stream **16** separated from the waste fiber supply **14** and/or plastic streams obtained from other sources. The ash **28** is added directly to the pyrolyzer **30** via a different inlet than that used to introduce the plastic stream **16** into the pyrolyzer **30** . The pyrolyzer **30** converts the plastic stream **16** into one or more products suitable for re-use or intermediates suitable for making more valuable products.

In embodiments the integrated recycling system may include additional components for conversion of the recovered fiber and pyrolysis products downstream of the fiber recovery system and pyrolyzer, respectively. For example, the recovered fiber may be used to manufacture paper-based products and the pyrolysis products may be converted to fuels and the like.

In another aspect, the integrated recycling system may further include one or more boilers for converting one or more products of the integrated recycling system into energy.

Advantageously, the energy produced by such byproducts may be used to supply the energy required for operating the integrated recycling system, thereby improving the overall energy efficiency and sustainability of the system.

It should be apparent that the foregoing relates only to certain embodiments of the present application and the resultant patent. Numerous changes and modifications may be made herein by one of ordinary skill in the art without departing from the scope of the invention as defined by the following claims.

## Claims

1. A method for reuse of a sludge comprising:
treating a waste fiber supply comprising an organic fraction and an inorganic fraction to produce at least a plastic portion, a fiber portion, and a sludge portion;
dewatering the sludge portion to produce a partially dewatered sludge;
converting the partially dewatered sludge by burning the partially dewatered sludge at a temperature of 1375°C to 1900°C to remove a majority of the organic fraction and produce an ash comprising inorganic materials in an amount of at least 80% by weight of the ash; and
adding the ash to a plastic pyrolysis system in an effective amount to remove at least a portion of one or more contaminants from a plastic feed stream of the plastic pyrolysis system, wherein:
the plastic pyrolysis system comprises a pyrolyzer, and
the ash is added directly to the pyrolyzer via a different inlet than that used to introduce the plastic feed stream into the pyrolyzer.

2. The method of claim 1, wherein the one or more contaminants are selected from the group consisting of chlorine, mercury, sulfur, and combinations thereof.

3. The method of claim 1, wherein the inorganic materials comprise calcium oxide, alumina, silica, or a combination thereof.

4. The method of claim 1, wherein the organic materials are present in the ash in an amount of less than 1.0% by weight of the ash.

5. The method of claim 1, wherein the ash comprises boron nitride, colloidal silicone dioxide, or a combination thereof.

6. The method of claim 1, wherein the step of converting the sludge further comprises grinding the ash to reduce its average diameter to less than 75 microns.

7. The method of claim 1, wherein the effective amount of ash is **characterized by** a stoichiometric ratio of the ash to the one or more contaminants in the plastic feed stream of 0.5:1 to 5:1.

8. The method of claim 1, wherein the plastic feed stream comprises plastic in an amount from 50% to 90% by weight of the plastic feed stream and the effective amount of ash is 3% to 6% by weight of the plastic feed stream.

9. The method of claim 1, further comprising separating a plastic portion and a fiber portion from the waste fiber supply to form the plastic feed stream, a recovered fiber stream, and the sludge.

10. The method of claim 9, wherein the recovered fiber stream comprises at least 50% by weight of the waste fiber supply.

11. An integrated recycling system comprising:
a fiber recovery system for treating a waste fiber supply to produce at least a plastic portion, a fiber portion, and a sludge portion;
a means for at least partially dewatering the sludge portion to produce a partially dewatered sludge;
a burner for converting the partially dewatered sludge at a temperature of 1375°C to 1900°C into an ash comprising inorganic materials in an amount of at least 80% by weight of the ash; and
a pyrolyzer configured to pyrolyze a mixture of the plastic portion and at least a portion of the ash, wherein the ash is added directly to the pyrolyzer via a different inlet than that used to introduce the plastic portion into the pyrolyzer.

12. The system of claim 11, wherein the fiber recovery system comprises a rotoclave for separating the plastic portion and the fiber portion from the waste fiber supply.

13. The system of claim 11, wherein the fiber recovery system comprises a cleaner, a deinker, a clarifier, or a combination thereof.

14. The system of claim 11, wherein the fiber recovery system comprises a separator for removing short fibers and inorganic materials not fixed to long fibers, the long fibers being suitable for use in one or more recycled paper products.

15. The system of claim 11, wherein the means for at least partially dewatering the sludge portion comprises a mechanical press.

## Patentansprüche

1. Verfahren zur Wiederverwendung von Schlamm, umfassend:
Behandeln einer Faserabfallzuführung, die eine organische Fraktion und eine anorganische Fraktion umfasst, zum Erzeugen mindestens eines Kunststoffteils, eines Faserteils, und eines Schlammteils;
Entwässern des Schlammteils zur Herstellung eines teilweise entwässerten Schlamms;
Umwandeln des teilweise entwässerten Schlamms durch Verbrennen des teilweise entwässerten Schlamms bei einer Temperatur von 1375°C bis 1900°C zum Entfernen einer Mehrheit der organischen Fraktion und Erzeugen einer Asche, die anorganische Stoffe in einer Menge von mindestens 80 Gew.-% der Asche umfasst; und
Hinzufügen der Asche zu einem Kunststoff-Pyrolysesystem in einer wirksamen Menge zum Entfernen von mindestens einem Teil von einem oder mehrerer Kontaminanten aus einem Kunststoffbeschickungsstrom des Kunststoff-Pyrolysesystems, wobei:
das Kunststoff-Pyrolysesystem einen Pyrolysator umfasst, und
die Asche direkt über einen anderen Einlass als jenen hinzugefügt wird, der zum Einbringen des Kunststoffbeschickungsstroms in den Pyrolysator verwendet wird.

2. Verfahren nach Anspruch 1, wobei der eine oder mehrere Kontaminanten aus der Gruppe ausgewählt werden, die aus Chlor, Quecksilber, Schwefel und Kombinationen davon besteht.

3. Verfahren nach Anspruch 1, wobei die anorganischen Stoffe Kalziumoxid, Aluminiumoxid, Kieselsäure oder eine Kombination davon umfassen.

4. Verfahren nach Anspruch 1, wobei die organischen Stoffe in der Asche in einer Menge von weniger als 1,0 Gew.-% je Gewicht der Asche vorhanden sind.

5. Verfahren nach Anspruch 1, wobei die Asche Bornitrid, kolloidales Siliziumdioxid, oder eine Kombination davon umfasst.

6. Verfahren nach Anspruch 1, wobei der Schritt des Umwandelns des Schlamms weiter Mahlen der Asche zum Verringern ihres mittleren Durchmessers auf weniger als 75 Mikrometer umfasst.

7. Verfahren nach Anspruch 1, wobei die effektive Menge an Asche durch ein stöchiometrisches Verhältnis der Asche zu einem oder mehreren Kontaminanten in dem Kunststoffbeschickungsstrom von 0,5:1 bis 5:1 gekennzeichnet ist.

8. Verfahren nach Anspruch 1, wobei der Kunststoffbeschickungsstrom Kunststoff in einer Menge von 50 Gew.-% bis 90 Gew.-% des Kunststoffbeschickungsstroms umfasst und die effektive Menge an Asche 3 Gew.-% bis 6 Gew.-% des Kunststoffbeschickungsstroms beträgt.

9. Verfahren nach Anspruch 1, weiter umfassend das Trennen einens Kunststoffteils und eines Faserteils aus der Faserabfallzuführung zum Bilden des Kunststoffbeschickungsstroms, eines Stroms an rückgewonnenen Fasern und des Schlamms.

10. Verfahren nach Anspruch 9, wobei der Strom an rückgewonnenen Fasern mindestens 50 Gew.-% von der Faserabfallzuführung umfasst.

11. Integriertes Recyclingsystem, umfassend:
ein Faserrückgewinnungssystem zur Behandlung einer Faserabfallzuführung zum Erzeugen mindestens eines Kunststoffteils, eines Faserteils und eines Schlammteils;
ein Mittel zum mindestens teilweise Entwässern des Schlammteils zum Erzeugen eines teilweise entwässerten Schlamms;
einen Brenner zum Umwandeln des teilweise entwässerten Schlamms bei einer Temperatur von 1375°C bis 1900°C in eine Asche, die anorganische Stoffe in einer Menge von mindestens 80 Gew.-% der Asche umfasst; und
einen Pyrolysator, der zum Pyrolysieren eines Gemisches des Kunststoffteils und mindestens eines Teils der Asche konfiguriert ist, wobei die Asche direkt über einen anderen Einlass als jenen hinzugefügt wird, der zum Einbringen des Kunststoffteils in den Pyrolysator verwendet wird.

12. System nach Anspruch 11, wobei das Faserrückgewinnungssystem einen Rotoklav zum Trennen des Kunststoffteils und des Faserteils von der Faserabfallzuführung umfasst.

13. System nach Anspruch 11, wobei das Faserrückgewinnungssystem einen Reiniger, einen Druckfarbenentferner, einen Klärer oder eine Kombination davon umfasst.

14. System nach Anspruch 11, wobei das Faserrückgewinnungssystem einen Trenner zum Entfernen kurzer Fasern und anorganischer Stoffe, die nicht an lange Fasern gebunden sind, umfasst, wobei die langen Fasern zur Verwendung in einem oder mehreren Recyclingpapierprodukten geeignet ist.

15. System nach Anspruch 11, wobei die Mittel zum mindestens teilweise Entwässern des Schlammteils eine mechanische Presse umfassen.

## Revendications

1. Procédé de réutilisation d'une boue comprenant :
le traitement d'une alimentation en déchets fibreux comprenant une fraction organique et une fraction inorganique pour produire au moins une partie de matière plastique, une partie de fibres, et une partie de boue ;
la déshydratation de la partie de boue pour produire une boue partiellement déshydratée ;
la conversion de la boue partiellement déshydratée par la combustion de la boue partiellement déshydratée à une température de 1375 °C à 1900 °C pour éliminer une majorité de la fraction organique et produire une cendre comprenant des matériaux inorganiques dans une proportion d'au moins 80 % en poids de la cendre ; et
l'ajout de la cendre à un système de pyrolyse de matière plastique en proportion efficace pour éliminer au moins en partie un ou plusieurs contaminants à partir d'un flux d'alimentation en plastique du système de pyrolyse de matière plastique, dans lequel :
le système de pyrolyse de matière plastique comprend un pyrolyseur, et
la cendre est ajoutée directement au pyrolyseur via une admission différente de celle qui est utilisée pour introduire le flux d'alimentation en plastique dans le pyrolyseur.

2. Procédé selon la revendication 1, dans lequel le ou les plusieurs contaminants est/sont choisi(s) dans le groupe constitué par le chlorure, le mercure, le soufre, et des combinaisons de ceux-ci.

3. Procédé selon la revendication 1, dans lequel les matériaux inorganiques comprennent de l'oxyde de calcium, de l'alumine, de la silice, ou une combinaison de ceux-ci.

4. Procédé selon la revendication 1, dans lequel les matériaux organiques sont présents dans la cendre en quantité inférieure à 1,0 % en poids de la cendre.

5. Procédé selon la revendication 1, dans lequel la cendre comprend du nitrure de bore, du dioxyde de silicium colloïdal, ou une combinaison de ceux-ci.

6. Procédé selon la revendication 1, dans lequel l'étape de conversion de la boue comprend en outre le broyage de la cendre pour réduire son diamètre moyen à moins de 75 micromètres.

7. Procédé selon la revendication 1, dans lequel la quantité efficace de cendre se **caractérise par** un rapport stoechiométrique de la cendre à l'un ou les plusieurs contaminants dans le flux d'alimentation en plastique de 0,5:1 à 5:1.

8. Procédé selon la revendication 1, dans lequel le flux d'alimentation en plastique comprend du plastique dans une proportion allant de 50% à 90% en poids du flux d'alimentation en plastique et la proportion efficace de cendre est de 3 % à 6 % en poids du flux d'alimentation en plastique.

9. Procédé selon la revendication 1, comprenant en outre la séparation d'une partie de plastique et d'une partie de fibres depuis l'alimentation en déchets fibreux pour former le flux d'alimentation en plastique, un flux de fibres de récupération, et la boue.

10. Procédé selon la revendication 9, dans lequel le flux de fibres de récupération comprend au moins 50 % en poids de l'alimentation en déchets fibreux.

11. Système de recyclage intégré comprenant :
un système de récupération de fibres pour le traitement d'une alimentation en déchets fibreux pour produire au moins une partie de plastique, une partie de fibres, et une partie de boue ;
un moyen pour déshydrater au moins partiellement la partie de boue pour produire une boue partiellement déshydratée ;
un brûleur pour convertir la boue partiellement déshydratée à une température de 1375 ° à 1900 °C en une cendre comprenant des matériaux inorganiques dans une proportion d'au moins 80 % en poids de la cendre ; et
un pyrolyseur configuré pour pyrolyser un mélange de la partie de plastique et au moins une partie de la cendre, dans lequel la cendre est ajoutée directement au pyrolyseur via une admission différente de celle utilisée pour introduire la partie de plastique dans le pyrolyseur.

12. Système selon la revendication 11, dans lequel le système de récupération de fibres comprend un autoclave tournant destiné à séparer la partie de plastique et la partie de fibres depuis l'alimentation en déchets fibreux.

13. Système selon la revendication 11, dans lequel le système de récupération de fibres comprend un nettoyeur, un système de désencrage, un décanteur, ou une combinaison de ceux-ci.

14. Système selon la revendication 11, dans lequel le système de récupération de fibres comprend un séparateur destiné à éliminer les fibres courtes et les matériaux inorganiques non fixés aux fibres longues, les fibres longues étant adaptées à l'utilisation dans un ou plusieurs produits en papier recyclé.

15. Système selon la revendication 11, dans lequel les moyens de déshydratation au moins partielle de la partie de boue comprennent une presse mécanique.
